# EUROPÄISCHE PATENTSCHRIFT

(11) **EP 2 577 117 B1**
(45) Veröffentlichungstag und Bekanntmachung des Hinweises auf die Patenterteilung: **28.01.2015**
(21) Anmeldenummer: 11726054.7
(22) Anmeldetag: 29.04.2011
(51) Int. Cl.: F16J 15/32, F01D 11/00

(54) **VERFAHREN ZUM FESTLEGEN EINES BÜRSTENDICHTELEMENTS IN EINER NUT EINES GEHÄUSESEGMENTS**
METHOD FOR FASTENING A BRUSH SEALING ELEMENT IN A GROOVE OF A HOUSING SEGMENT
PROCÉDÉ POUR FIXER UN ÉLÉMENT D'ÉTANCHÉITÉ À BROSSE DANS UNE RAINURE D'UN SEGMENT DE BOÎTIER

(30) Priorität: 28.05.2010 DE 102010021923
(43) Veröffentlichungstag der Anmeldung: 10.04.2013
(73) Patentinhaber: MTU Aero Engines AG, 80995 München (DE)
(72) Erfinder: BEICHL, Stefan, 82211 Herrsching (DE); ÜCGÜL, Erhan, 12159 Berlin (DE)
(86) Internationale Anmeldenummer: PCT/DE2011/000459
(87) Internationale Veröffentlichungsnummer: WO 2011/147395

(56) Entgegenhaltungen:
- EP-A2- 1 998 090
- GB-A- 2 315 302
- US-A1- 2005 040 602

## Beschreibung

Die Erfindung betrifft ein Dichtungssystem der im Oberbegriff des Patentanspruchs 1 angegebenen Art sowie ein Aufnahmeelement für ein derartiges Dichtungssystem.

Es gibt es eine Reihe von Anwendungsfällen, in welchen zwei relativ zueinander rotierende Teile, wie etwa ein Stator und ein Rotor, nicht-hermetisch gegeneinander abzudichten sind. Ein derartiger Anwendungsfall ist zum Beispiel die Abdichtung eines gasdurchströmten, ringförmigen Spalts zwischen dem Gehäuse und dem Rotor einer thermischen Strömungsmaschine, beispielsweise einer Gasturbine für ein Flugzeug. Zur nicht-hermetischen Abdichtung ringförmiger Zwischenräume zwischen relativ zueinander rotierenden Baugruppen werden dabei häufig Bürstendichtungen verwendet, da Bürstendichtungen bei gleicher Dichtwirkung leichter und kompakter sind als Labyrinthdichtungen. Der Einsatz von Bürstendichtungen erlaubt daher die Optimierung der konstruktiven Auslegung von Rotoren und Gehäusen. Vor allem im Triebwerksbau erzielt man durch diese Bauraumreduzierung signifikante Kosten- und Gewichtseinsparungen.

Die DE 103 37 867 A1 offenbart ein Dichtungssystem mit einem Bürstendichtungselement, welches von mehreren Borsten gebildet ist, die um ein Kernelement gewickelt und am Kernelement über einen Klemmring fixiert sind. Die Einheit aus Klemmring, Kernelement und Borsten ist in einem sogenannten Borstengehäuse angeordnet, welches von einem als Stützring ausgebildeten Stützelement und einem als Deckring ausgebildeten Deckelement gebildet ist. Der Deckring schützt das Bürstendichtungselement vor direkter Anströmung und Fremdkörpern, der Stützring sorgt für den nötigen Halt. Dank ihrer Elastizität können die Borsten axiale und radiale Rotorbewegungen kompensieren, da sie weggedrückt werden können und anschließend ihre ursprüngliche Lage wieder einnehmen. Während des Betriebs einer zugeordneten Strömungsmaschine liegen die Borstenspitzen auf einer Dichtfläche auf und zwingen anströmende Gase, durch das Borstenpaket des Bürstendichtungselements zu strömen. Dieser Gasstrom drückt das Borstenpaket gegen den Stützring und bewirkt eine Verdichtung des Borstenpakets. Dabei werden die Freiräume zwischen den Borsten geschlossen und die Gasdurchlässigkeit auf ein Minimum verringert. Auf diese Weise wird eine nicht-hermetische Barriere für den Gasstrom erzeugt. Das mehrßend können mehrere Gehäusesegmente zu einem Gehäuse gefügt werden.

Das Dokument GB 2 315 302 A betrifft ein gattungsgemäßes Dichtungssystem für eine Gehäusesegment einer thermischen Strömungsmaschine und ein gattungsgemäßes Aufnahmeelement für ein Dichtungssystem. Das Gehäusesegment ist bevorzugt eine Leitschaufel bzw. ein Leitschaufelsegment einer Gasturbine. Die Abdichtung übernimmt eine Bürstendichtelement, welches als integraler, geschlossener Ring ausgeführt und somit nicht segmentiert ist.

Das Bürstendichtelement ist an dem Gehäuse bzw. Leitschaufelsegmenten über eine Speichenzentrierung gelagert. Hierzu weist das ringförmige Bürstendichtelement axial vorstehende Gleitelement (5) auf, welche relativ zu Führungselementen (6) an den Leitschaufelsegmenten (4) radial beweglich sind. Die Abdichtung im Bewegungsbereich übernimmt eine Nut an den Leitschaufelsegmenten. Die Borsten des Bürstendichtelements sind radial nach Innen zu einem rotierenden Bauteil, insbesondere einer Welle, hin ausgerichtet.

Aufgabe der vorliegenden Erfindung ist es, ein Dichtungssystem bereitzustellen, welches einfach und kostengünstig herstellbar ist. Eine weitere Aufgabe besteht darin, ein Aufnahmeelement für ein solches Dichtungssystem bereitzustellen.

Die Aufgaben werden erfindungsgemäß durch ein Dichtungssystem mit den Merkmalen des Patenanspruchs 1 sowie durch ein Aufnahmeelement gemäß Patentanspruch 3 für ein derartiges Dichtungssystem gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Dichtungssystems als vorteilhafte Ausgestaltungen des Aufnahmeelements und umgekehrt anzusehen sind.

Das Dichtungssystem umfasst wenigstens ein Bürstendichtelement, welches in einer Nut des Gehäusesegments lagegesichert ist. Dabei ist es vorgesehen, dass das Bürstendichtelement in einem Aufnahmeraum eines einteiligen Aufnahmeelements festgelegt und das Aufnahmeelement in der Nut des Gehäuseelements lagegesichert ist.

Gemäß der Erfindung ist vorgesehen, dass zum Lagesichern des Aufnahmeelements am Gehäusesegment wenigstens eine aus der Nut herausragende Lasche des Aufnahmeelements gegen eine Wand des Gehäusesegment gebogen ist. Dies stellt eine konstruktiv besonders einfache und schnelle Möglichkeit zum Lagesichern des Aufnahmeelements und damit des Bürstendichtelements am Gehäusesegment dar. Nach einer folgenden Montage mehrerer Gehäusesegmente sind die umgebogenen Laschen zwischen benachbarten Gehäusesegmenten eingeklemmt, wodurch auf einfache Weise eine besonders stabile, dauerhafte und leichte Lagesicherung jedes Bürstendichtelements erzielt wird.

In einer vorteilhaften Ausgestaltung der Erfindung ist vorgesehen, dass das Aufnahmeelement mindestens ein Klemmelement, insbesondere eine Klemmnase, umfasst, mittels welchem das Bürstendichtelement im Aufnahmeraum des Aufnahmeelements festgelegt ist. Dies stellt eine besonders schnelle, einfache und kostengünstige Möglichkeit zum Festlegen des Bürstendichtelements im Aufnahmeelement dar.

Ein weiterer Aspekt der Erfindung betrifft ein Aufnahmeelement für ein Dichtungssystem nach einem der vorhergehenden Ausführungsbeispiele, wobei das Aufnahmeelement einen Aufnahmeraum zum Festlegen eines Bürstendichtelements im Aufnahmeelement umfasst und eine an eine Geometrie einer Nut eines Gehäusesegments einer thermischen Strömungsmaschine, insbesondere einer Gasturbine, angepasste Außengeometrie aufweist. Das erfindungsgemäße Aufnahmeelement stellt somit eine einfache und kostengünstige Möglichkeit zum Verbinden eines Bürstendichtelements mit einem Gehäusesegment dar, da das Bürstendichtelement lediglich im Aufnahmeelement festgelegt und anschließend mittels des Aufnahmeelements in der Nut des Gehäusesegments lagegesichert werden kann. Das Aufnahmeelement kann hierzu beispielsweise eine Außengeometrie mit einem gewissen Übermaß im Vergleich zu einer Innenkontur der Nut aufweisen, so dass das Aufnahmeelement in die Nut eingepresst werden kann. Alternativ kann vorgesehen sein, dass die Außengeometrie des Aufnahmeelements zumindest im Wesentlichen der Innenkontur der Nut entspricht. Erfindungsgemäß umfasst das Aufnahmeelement wenigstens eine seitliche Lasche zur Anlage an einer Wand des Gehäusesegments.

Weitere Vorteile ergeben sich, wenn das Aufnahmeelement zumindest bereichsweise im Querschnitt U-förmig ausgebildet ist. Hierdurch kann beispielsweise ein Klemmrohr des Bürstenteile sind den vorhergehenden Beschreibungen zu entnehmen, wobei vorteilhafte Ausgestaltungen des Verfahrens als vorteilhafte Ausgestaltungen des Dichtungssystems anzusehen sind und umgekehrt.

Weitere Vorteile ergeben sich, indem das Aufnahmeelement wenigstens eine Lasche aufweist, die in einem seitlichen Endbereich der Nut an eine Wand des Gehäusesegments umgebogen ist. Dies stellt eine konstruktiv besonders einfache, schnelle und zuverlässige Möglichkeit zum mittelbaren Lagesichern des Bürstendichtelements am Gehäusesegment dar.

In einer weiteren vorteilhaften Ausgestaltung der Erfindung ist vorgesehen, dass das Aufnahmeelement mindestens ein Klemmelement, insbesondere eine Klemmnase, umfasst, mittels welchem das Bürstendichtelement im Aufnahmeraum des Aufnahmeelements festgelegt ist. Dies stellt eine besonders schnelle, einfache und kostengünstige Möglichkeit zum Festlegen des Bürstendichtelements im Aufnahmeelement dar.

Ein weiterer Aspekt der Erfindung betrifft ein Aufnahmeelement für ein Dichtungssystem nach einem der vorhergehenden Ausführungsbeispiele, wobei das Aufnahmeelement einen Aufnahmeraum zum Festlegen eines Bürstendichtelements im Aufnahmeelement umfasst und eine an eine Geometrie einer Nut eines Gehäusesegments einer thermischen Strömungsmaschine, insbesondere einer Gasturbine, angepasste Außengeometrie aufweist. Das erfindungsgemäße Aufnahmeelement stellt somit eine einfache und kostengünstige Möglichkeit zum Verbinden eines Bürstendichtelements mit einem Gehäusesegment dar, da das Bürstendichtelement lediglich im Aufnahmeelement festgelegt und anschließend mittels des Aufnahmeelements in der Nut des Gehäusesegments lagegesichert werden kann. Das Aufnahmeelement kann hierzu beispielsweise eine Außengeometrie mit einem gewissen Übermaß im Vergleich zu einer Innenkontur der Nut aufweisen, so dass das Aufnahmeelement in die Nut eingepresst werden kann. Alternativ kann vorgesehen sein, dass die Außengeometrie des Aufnahmeelements zumindest im Wesentlichen der Innenkontur der Nut entspricht. Weitere sicher ergebende Merkmale und deren Vorteile sind den vorhergehenden Beschreibungen zu entnehmen, wobei vorteilhafte Ausgestaltungen des erfindungsgemäßen Verfahrens und des erfindungsgemäßen Dichtungssystems als vorteilhafte Ausgestaltungen des Aufnahmeelements und umgekehrt anzusehen sind.

Weitere Vorteile ergeben sich, wenn das Aufnahmeelement zumindest bereichsweise im Querschnitt U-förmig ausgebildet ist. Hierdurch kann beispielsweise ein Klemmrohr des Bürstendichtelements im entsprechend U-förmigen Aufnahmeraum durch Einklemmen festgelegt werden, während die Borsten des Bürstendichtelements weiterhin innerhalb des Aufnahmeraums relativ zum Aufnahmeelement bewegbar sind.

In einer weiteren vorteilhaften Ausgestaltung der Erfindung ist vorgesehen, dass einander gegenüberliegende Wände des Aufnahmeelements unterschiedliche Wandflächen und/oder Wandhöhen aufweisen. Hierdurch kann eine Wand das Bürstendichtungselement während des Betriebs einer zugeordneten Strömungsmaschine vor direkter Anströmung und Fremdkörpern schützen, während die gegenüberliegende Wand die Borsten des Bürstendichtungselements in Strömungsrichtung abstützt.

Indem das Aufnahmeelement aus einem Metall und/oder einer Metalllegierung, insbesondere aus einem Metallblech, besteht, kann es besonders kostengünstig hergestellt werden. Aufgrund der Duktilität von Metallen bzw. Metalllegierungen kann hierdurch das Bürstendichtungselement besonders einfach im Aufnahmeraum des Aufnahmeelements durch Einklemmen festgelegt werden. Weiterhin kann das Aufnahmeelement bei Verwendung eines metallischen Werkstoffs besonders schnell und einfach durch Biegen am Gehäusesegment lagegesichert werden. Durch geeignete Wahl des Metalls bzw. der Metalllegierung können zudem die Eigenschaften des Aufnahmeelements - beispielsweise im Hinblick auf Temperaturfestigkeit, Korrosionsbeständigkeit und dergleichen - gezielt eingestellt werden.

In weiterer Ausgestaltung ist vorgesehen, dass das Aufnahmeelement mindestens ein Klemmelement, insbesondere eine Klemmnase, umfasst, mittels welchem das Bürstendichtelement im Aufnahmeraum festlegbar ist. Hierdurch kann das Bürstendichtelement besonders schnelles und einfaches durch Einklemmen im Aufnahmeraum festgelegt werden.

Indem das Aufnahmeelement mehrere voneinander beabstandete Klemmelemente umfasst, kann das Bürstendichtelement an mehreren Stellen eingeklemmt und besonders zuverlässig im Aufnahmeraum festgelegt werden.

In weiterer Ausgestaltung ist vorgesehen, dass wenigstens ein Klemmelement eine an eine Querschnittsgeometrie eines Klemmrohrs des Bürstendichtelements angepasste Geometrie besitzt. Hierdurch kann das einerseits das Klemmrohr des Bürstendichtelement zuverlässig im Aufnahmeraum festgelegt werden, andererseits sind die Borsten des Bürstendichtelements weiterhin beweglich und können im Betrieb einer zugeordneten Strömungsmaschine axiale und radiale Rotorbewegungen kompensieren.

Das Aufnahmeelement kann besonders schnell, einfach und kostengünstig am Gehäusesegment lagegesichert werden, wenn es wenigstens eine seitliche Lasche zur Anlage an einer Wand des Gehäusesegments umfasst. Dabei kann auch vorgesehen sein, dass das Aufnahmeelement zwei oder mehr Laschen umfasst, die durch einfaches Umbiegen zum Lagesichern des Aufnahmeelements am Gehäusesegment verwendet werden können.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine schematische Perspektivansicht eines Aufnahmeelements, in dessen Aufnahmeraum ein Bürstendichtelement festgelegt ist;
- Fig. 2: eine schematische Perspektivansicht eines Gehäusesegments, in dessen Nut das in Fig. 1 gezeigte Bürstendichtelement mittels des Aufnahmeelements lagegesichert ist; und
- Fig. 3: eine schematische Seitenansicht des in Fig. 2 gezeigten Details III.

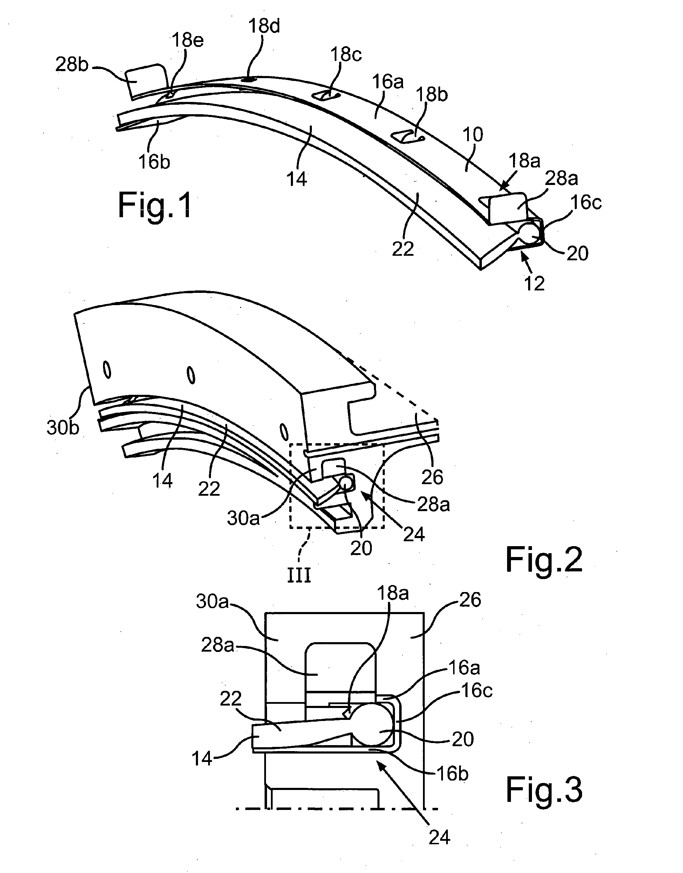

Fig. 1 zeigt eine schematische Perspektivansicht eines Aufnahmeelements 10, in dessen Aufnahmeraum 12 ein Bürstendichtelement 14 festgelegt ist. Das einteilige Aufnahmeelement 10 ist im Querschnitt U-förmig ausgebildet und besteht aus einem Metallblech. Die sich gegenüberliegenden Wände 16a, 16b des Aufnahmeelements 10 weisen dabei unterschiedliche Wandhöhen auf. Die Wand 16a umfasst mehrere voneinander beabstandete Klemmelemente 18a-e, mittels welchen das Bürstendichtelement 14 im Aufnahmeraum 12 durch Einklemmen festgelegt ist. Die Klemmelemente 18a-e sind vorliegend durch Ausstanzen hergestellt und als Klemmnasen ausgebildet, deren Geometrie an eine Querschnittsgeometrie eines Klemmrohrs 20 des Bürstendichtelements 14 angepasst ist. Das Bürstendichtelement 14 ist als solches aus dem Stand der Technik bekannt und umfasst Borsten 22, die um ein Kernelement (nicht abgebildet) gewickelt und am Kernelement über das Klemmrohr 20 fixiert sind. Die Klemmelemente 18a-e drücken das Klemmrohr 20 gegen eine Rückwand 16c des Aufnahmeelements 10 und legen das Bürstendichtelement 14 hierdurch im Aufnahmeraum 12 fest. Anstelle des gezeigten Bürstendichtelements 14 können grundsätzlich auch Bürstendichtelemente 14 mit abweichender Bauform verwendet werden.

Die Klemmelemente 18a-e können grundsätzlich vorgebogen sein, so dass das Bürstendichtelement 14 nach Art einer Verrastung durch Eindrücken gegen den Widerstand der Klemmelemente 18a-e in den Aufnahmeraum 12 eingedrückt und am Aufnahmeelement 10 festgelegt wird. Alternativ oder zusätzlich kann vorgesehen sein, dass einige oder alle Klemmelemente 18a-e zunächst mit der Wand 16a fluchten bzw. zumindest nicht in den Aufnahmeraum 12 ragen und erst nach dem Einlegen des Bürstendichtelements 14 umgebogen werden.

Das Aufnahmeelements 10 umfasst weiterhin seitliche Laschen 28a, 28b, die im vorliegenden Beispiel an den Enden der Wand 16a angeordnet sind und deren genaue Funktion im Folgenden näher erläutert werden wird. Alternativ oder zusätzlich kann vorgesehen sein, dass wenigstens eine Lasche 28 an der Wand 16b angeordnet ist. Weiterhin kann vorgesehen sein, dass wenigstens eine Lasche 28 an einem vorderen Endbereich der Wand 16a und/oder der Wand 16b ausgebildet ist.

Fig. 2 zeigt eine schematische Perspektivansicht des Gehäusesegments 26, in dessen Nut 24 das in Fig. 1 gezeigte Bürstendichtelement 14 mittels des Aufnahmeelements 10 lagegesichert ist. Zu diesem Zweck wird das Aufnahmeelement 10, nachdem das Bürstendichtelement 14 wie in Fig. 1 gezeigt mit Hilfe der Klemmelemente 18a-e an diesem festgelegt wurde, in die Nut 24 eingesetzt und durch Umbiegen der Laschen 28a, 28b an den seitlichen Wänden 30a, 30b des Gehäusesegments 26 lagegesichert. Dies erlaubt einen besonders einfachen und kostengünstigen Einbau des Bürstendichtelements 14 im Gehäusesegment 26. Das Gehäusesegment 26 kann dann im Rahmen der folgenden Montageschritte mit weiteren Gehäusesegmenten 26 zu einem fertigen Gehäuse (nicht gezeigt) einer Gasturbine gefügt werden. Dabei werden die Laschen 28a, 28b zwischen den aneinanderliegenden Wänden 30a, 30b benachbarter Gehäusesegmente 26 eingeklemmt, wodurch eine weitere Verbesserung der Lagesicherung des Bürstendichtelements 14 erzielt wird.

Fig. 3 zeigt zur weiteren Verdeutlichung eine schematische Seitenansicht des in Fig. 2 gezeigten Details III. Dabei ist insbesondere das durch das im Bereich der Lasche 28a angeordnete Klemmelement 18a festgelegte Klemmrohr 20 gut erkennbar. Weiterhin ist erkennbar, dass die Wand 16a des U-förmigen Aufnahmeelements 10 eine geringere Wandhöhe aufweist, als die ihr gegenüberliegende Wand 16b. Die Borsten 22 können sich innerhalb des Aufnahmeraums 12 bzw. der Nut 24 des Gehäusesegments 26 weiterhin bewegen. Während des Betriebs einer zugeordneten Strömungsmaschine können daher radiale Rotorbewegungen aufgrund der Nachgiebigkeit der schräg gestellten Borsten 22 ausgeglichen werden. Der sich ausbildende Gasfilm zwischen den Spitzen der Borsten 22 und der zugeordneten Dichtfläche sorgt dabei für einen nahezu verschleißfreien Betrieb.

## Patentansprüche

1. Dichtungssystem für ein um eine Achse kreisringförmig gebogenes Gehäusesegment (26) einer thermischen Strömungsmaschine, insbesondere einer Gasturbine, mit wenigstens einem segmentförmigen Bürstendichtelement (14), welches in einer axial offenen, kreisförmig gebogenen Nut (24) des Gehäusesegments (26) lagegesichert ist, wobei das Bürstendichtelement (14) in einem axial offenen Aufnahmeraum (12) eines einteiligen, segmentförmigen Aufnahmeelements (10) festgelegt und das Aufnahmeelement (10) in der Nut (24) des Gehäusesegments (26) lagegesichert ist, **dadurch gekennzeichnet, dass** das segmentförmige Aufnahmeelement (10) wenigstens eine Lasche (28a, 28b) aufweist, die in einem in Umfangsrichtung weisenden Endbereich der Nut (24) an eine in Umfangsrichtung weisende Wand (30a, 30b) des Gehäusesegments (26) umgebogen ist, wobei die wenigstens eine umgebogene Lasche (28a, 28b) zwischen benachbarten Gehäusesegmenten (26) eingeklemmt ist.

2. Dichtungssystem nach Anspruch 1, **dadurch gekennzeichnet, dass** das Aufnahmeelement (10) mindestens ein Klemmelement (18a-e), insbesondere eine Klemmnase, umfasst, mittels welchem das Bürstendichtelement (14) im Aufnahmeraum (12) des Aufnahmeelements (10) festgelegt ist.

3. Aufnahmeelement (10) in Segmentform für ein Dichtungssystem nach Anspruch 1 oder 2, mit einem axial offenen Aufnahmeraum (12) zum Festlegen eines segmentförmigen Bürstendichtelements (14) und mit einer an eine kreisringförmig gebogene Geometrie einer axial offenen Nut (24) eines um eine Achse kreisringförmig gebogenen Gehäusesegments (26) einer thermischen Strömungsmaschine, insbesondere einer Gasturbine, angepassten Außengeometrie, **dadurch gekennzeichnet, dass** dieses wenigstens eine seitliche Lasche (28a, 28b) zur Anlage in einem in Umfangsrichtung weisenden Endbereich der Nut (24) an eine in Umfangsrichtung weisende Wand (30a, 30b) des Gehäusesegments (26) umfasst.

4. Aufnahmeelement (10) nach Anspruch 3, **dadurch gekennzeichnet, dass** dieses zumindest bereichsweise im Querschnitt U-förmig ausgebildet ist.

5. Aufnahmeelement (10) nach Anspruch 3 oder 4, **dadurch gekennzeichnet, dass** einander gegenüberliegende Wände (16a, 16b) des Aufnahmeelements (10) unterschiedliche Wandflächen und/oder Wandhöhen aufweisen.

6. Aufnahmeelement (10) nach einem der Ansprüche 3 bis 5, **dadurch gekennzeichnet, dass** dieses aus einem Metall und/oder einer Metallegierung, insbesondere aus einem Metallblech, besteht.

7. Aufnahmeelement (10) nach einem der Ansprüche 3 bis 6, **dadurch gekennzeichnet, dass** dieses mindestens ein Klemmelement (18a-e), insbesondere eine Klemmnase, umfasst, mittels welchem das Bürstendichtelement (14) im Aufnahmeraum (12) festlegbar ist.

8. Aufnahmeelement (10) nach Anspruch 7 **dadurch gekennzeichnet, dass** dieses mehrere voneinander beabstandete Klemmelemente (18a-e) umfasst.

9. Aufnahmeelement (10) nach Anspruch 7 oder 8, **dadurch gekennzeichnet, dass** wenigstens ein Klemmelement (18a-e) eine an eine Querschnittsgeometrie eines Klemmrohrs (20) des Bürstendichtelements (14) angepasste Geometrie besitzt.

## Claims

1. A sealing system for a housing segment (26) of a thermal turbo-engine, in particular a gas turbine, that is bent around an axis in the shape of a circular ring, having at least one segment-shaped brush-sealing element (14) which is positionally secured in an axially open, circularly bent groove (24) of the housing segment (26), wherein the brush-sealing element (14) is fixed in an axially open receiving chamber (12) of a one-piece, segment-shaped receiving element (10), and the receiving element (10) is positionally secured in the groove (24) of the housing segment (26), **characterised in that** the segment-shaped receiving element (10) has at least one tongue (28a, 28b) which in an end region of the groove (24) pointing in the peripheral direction is bent round onto a wall (30a, 30b) of the housing segment (26) pointing in the peripheral direction, wherein the at least one tongue (28a, 28b) that has been bent round is clamped in between adjacent housing segments (26).

2. A sealing system according to claim 1, **characterised in that** the receiving element (10) comprises at least one clamping element (18a-e), in particular one clamping lug, by means of which the brush-sealing element (14) is fixed in the receiving chamber (12) of the receiving element (10).

3. A receiving element (10) in segment form for a sealing system according to claim 1 or 2, having an axially open receiving chamber (12) for the fixation of a segment-shaped brush-sealing element (14) and having an outer geometry adapted to a geometry, bent in the shape of a circular ring, of an axially open groove (24) of a housing segment (26) of a thermal turbo-engine, in particular a gas turbine, that is bent around an axis in the shape of a circular ring, **characterised in that** it comprises at least one lateral tongue (28a, 28b) for fitting in an end region of the groove (24), pointing in the peripheral direction, against a wall (30a, 30b) of the housing segment (26) pointing in the peripheral direction,

4. A receiving element (10) according to claim 3, **characterised in that** it is formed at least in regions in a U-shaped manner in cross-section.

5. A receiving element (10) according to claim 3 or 4, **characterised in that** walls (16a, 16b) of the receiving element (10) lying opposite each other have different wall areas and/or wall heights.

6. A receiving element (10) according to one of claims 3 to 5, **characterised in that** it consists of a metal and/or a metal alloy, in particular of a metal sheet.

7. A receiving element (10) according to one of claims 3 to 6, **characterised in that** it comprises at least one clamping element (18a-e), in particular one clamping lug, by means of which the brush-sealing element (14) can be fixed in the receiving chamber (12).

8. A receiving element (10) according to claim 7, **characterised in that** it comprises a plurality of clamping elements (18a-e) that are spaced apart from each other.

9. A receiving element (10) according to claim 7 or 8, **characterised in that** at least one clamping element (18a-e) has a geometry adapted to a cross-sectional geometry of a clamping tube (20) of the brush-sealing element (14).

## Revendications

1. Système d'étanchéité pour un segment de carter (26) d'une turbomachine thermique, en particulier d'une turbine à gaz, le segment de carter (26) étant cintré en forme d'anneau circulaire autour d'un axe, le système d'étanchéité comportant au moins un élément d'étanchéité à brosse (14) en forme de segment, lequel est fixé dans une rainure (24) cintrée en forme de cercle et ouverte axialement du segment de carter (14), l'élément d'étanchéité à brosse (14) étant immobilisé dans un logement (12) ouvert axialement d'un élément de logement (10) monobloc en forme de segment et l'élément de logement (10) étant fixé dans la rainure (24) du segment de carter (26), **caractérisé en ce que** l'élément de logement (10) en forme de segment présente au moins une languette (28a, 28b) recourbée dans une zone terminale de la rainure (24), la languette (28a, 28b) étant orientée en direction circonférentielle, sur une paroi (30a, 30b) orientée en direction circonférentielle du segment de carter (26), la au moins une languette recourbée (28a, 28b) étant coincée entre des segments de carter (26) voisins.

2. Système d'étanchéité selon la revendication 1, **caractérisée en ce que** l'élément de logement (10) comprend au moins un élément de blocage (18a-e), en particulier une clavette de blocage, au moyen duquel l'élément d'étanchéité à brosse (14) est immobilisé dans le logement (12) de l'élément de logement (10).

3. Élément de logement (10) en forme de segment pour un système d'étanchéité selon la revendication 1 ou la revendication 2, comportant un logement (12) axialement ouvert pour immobiliser un élément d'étanchéité à brosse (14) en forme de segment et ayant une géométrie extérieure adaptée à une géométrie, cintrée en forme d'anneau circulaire, d'une rainure (24) axialement ouverte d'un segment de carter (26) cintré en forme d'anneau circulaire autour d'un axe, d'une turbomachine thermique, en particulier d'une turbine à gaz, **caractérisé en ce que** celui-ci comprend au moins cette languette latérale (28a, 28b) pour plaquer, dans une zone terminale de la rainure (24), orientée en direction circonférentielle, contre une paroi (30a, 30b) orientée en direction circonférentielle du segment de carter (26).

4. Élément de logement (10) selon la revendication 3, **caractérisé en ce que** celui-ci a une section en forme de U, du moins à certains endroits.

5. Élément de logement (10) selon la revendication 3 ou la revendication 4, **caractérisé en ce que** des parois (16a, 16b) se faisant face de l'élément de logement (10) présentent des surfaces et/ou des hauteurs différentes.

6. Élément de logement (10) selon l'une quelconque des revendications 3 à 5, **caractérisé en ce que** celui-ci est constitué de métal et/ou d'un alliage métallique, en particulier d'une tôle métallique.

7. Élément de logement (10) selon l'une quelconque des revendications 3 à 6, **caractérisé en ce que** celui-ci comprend au moins un élément de blocage (18a-e), en particulier une clavette de blocage, au moyen de laquelle l'élément d'étanchéité à brosse (14) peut être immobilisé dans le logement (12).

8. Élément de logement (10) selon la revendication 7, **caractérisé en ce que** celui-ci comprend plusieurs éléments de blocage (18a-e) distants l'un de l'autre.

9. Élément de logement (10) selon la revendication 7 ou la revendication 8, **caractérisé en ce qu'**au moins un élément de blocage (18a-e) a une géométrie adaptée à une géométrie de section d'un tube de blocage (20) de l'élément d'étanchéité à brosse (14).
